# EUROPEAN PATENT SPECIFICATION

(11) **EP 2 442 493 B1**
(45) Date of publication and mention of the grant of the patent: **19.03.2014**
(21) Application number: 12150046.6
(22) Date of filing: 22.04.2009
(51) Int. Cl.: H04L 12/24, H04L 12/437, H04L 12/413

(54) **Force protection switching method in ethernet ring network**
Leistungsschutz-Umschaltverfahren in einem Ethernet-Ringnetzwerk
Procédé de commutation forcée de protection dans un réseau ethernet en boucle

(30) Priority: 22.04.2008 US 46829 P; 19.12.2008 KR 20080130444; 10.04.2009 KR 20090031258
(43) Date of publication of application: 18.04.2012
(62) Divisional of application: 09734259.6
(73) Proprietor: Electronics and Telecommunications Research Institute, Daejeon 305-350 (KR)
(72) Inventor: Kim, Do-Yeon, 305-762 Daejeon (KR); Cheung, Tae-Sik, 305-729 Daejeon (KR); Ahn, Byungjun, 305-768 Daejeon (KR); Kim, Bong Tae, 305-755 Daejeon (KR)
(74) Representative: Betten & Resch

(56) References cited:
- US-A1- 2001 021 177
- ITU-T Q9 - SG 15: "G.8032 Ethernet Ring Protection Overview", , March 2008 (2008-03), pages 1-23, XP002628431, Retrieved from the Internet: URL:http://www.ieee802.org/1/files/public/ docs2008/liaison-itut-g8032-overview-0308. pdf [retrieved on 2011-03-16]
- Masahiro Maruyoshi, Pedro Nunes: "Draft ITU-T Recommendation G.8032/Y.1344 Ethernet Rings Protection Switching", ITU International Telecommunication Union, no. TD 498 (PLEN/15) 22 February 2008 (2008-02-22), pages 1-35, XP002628432, Retrieved from the Internet: URL:http://www.itu.int/md/T05-SG15-080211- TD-PLEN-0498/en [retrieved on 2011-03-16]

## Description

### TECHNICAL FIELD

The present invention relates to a forced protection switching method and a forced protection switching clearing method in an Ethernet ring network.

### BACKGROUND ART

Due to an increase in Internet users, the rate at which traffic in a communication network has increased is high. Also, Internet users have demanded various types of services, such as a high-speed data service, an electronic commerce (e-commerce) transaction service, a telemedicine service, a virtual education service, and a real-time multimedia service.

Therefore, a management scheme of coping with a communication network that is malfunctioning or performing poorly is required to provide users with continuous services and to maximize efficiency of the communication network.

Methods of improving the survivability of a management scheme are mostly classified into protection switching and restoration. Protection switching refers to a method of rapidly restoring the communication network by presetting both a path and a bandwidth between nodes when faults in the communication network occur. Restoration refers to a method of restoring interrupted services to their original states using both available paths and a volume of the communication network after the faults in the communication network occur.

In more detail, protection switching is a technique that has been applied mainly to optical transmission equipment, such as synchronous digital hierarchy (SDH)/synchronous optical network (SONET).

A conventional Ethernet protection switching technique is to block a specific port when operating normally and to unblock the specific port when a fault is detected. Thus, an operator is not able to easily block a link that is temporarily operating to repair a transmission line of a specific node in an Ethernet ring network.

Document "ITU-T Q9 - SG 15" discloses an overview of the Ethernet Ring Protection (G.8032) technique. The document introduces the G.8032 recommendation, objectives and principles. It further discloses the protection switching mechanism and R-APS messages as well as some items under study.

Draft ITU-T recommendation document G.8032/Y.1344 discloses the APS protocol and protection switching mechanisms for ETH layer Ethernet ring topologies. The protection protocol defined in the Recommendation enables protected point-to-point, point-to-multipoint and multipoint-to-multipoint connectivity within the ring or interconnected rings, called "multi-Ring/ladder network" topology.

### DETAILED DESCRIPTION OF THE INVENTION

### TECHNICAL PROBLEM

The present invention provides a forced protection switching method and a forced protection switching clearing method in an Ethernet ring network to assist an operator to easily block and clear a link corresponding to a specific node so as to provide usefulness of the Ethernet ring network.

### TECHNICAL SOLUTION

The present invention is defined in the independent claim.

The dependent claims define advantageous embodiments thereof.

According to an aspect of the present invention, there is provided a forced protection switching method applied in a node of an Ethernet ring network, including:
receiving a forced switching (FS) command; blocking a port of a corresponding; forwarding a FS message indicating that the Ethernet ring network is forcedly switched; and flushing a filtering database (FDB).

According to another aspect of the present invention, there is provided a forced protection switching method applied in a node of an Ethernet ring network whose port is linked to an ring protection link (RPL) of the Ethernet ring network and is blocked, including: receiving a FS message indicating that the Ethernet ring network is forcedly switched; clearing the blocked port linked to the RPL; and flushing an FDB.

According to another aspect of the present invention, there is provided a forced protection switching method applied in a node of an Ethernet ring network, including: receiving a FS message indicating that the Ethernet ring network is forcedly switched; and flushing an FDB.

According to another aspect of the present invention, there is provided a forced protection switching clearing method applied in a node of an Ethernet ring network that has been forcedly switched, including: receiving a FS clear command; driving a timer; forwarding a clear message indicating that the node has been cleared of being forcedly switched; receiving a return message indicating that a port linked to an RPL of the Ethernet ring network has been blocked, after the timer ends; clearing the blocked port of the node; and flushing an FDB.

According to another aspect of the present invention, there is provided a forced protection switching clearing method applied in a node of an Ethernet ring network whose port is linked to an RPL of the Ethernet ring network and is cleared of being blocked, including: receiving a clear message indicating that the Ethernet ring network had been cleared of being forcedly switched; driving a timer; when the timer ends, blocking the port that is linked to the RPL; forwarding a return message indicating that the port linked to the RPL has been blocked; and flushing an FDB.

According to another aspect of the present invention, there is provided a forced protection switching clearing method applied in a node of an Ethernet ring network, including: receiving a clear message indicating that the Ethernet ring network had been cleared of being forcedly switched; receiving a return message indicating that a port linked to a RPL of the Ethernet ring network has been blocked; and flushing an FDB.

### ADVANTAGEOUS EFFECTS

According to the present invention, when an operator temporarily forcedly blocks a specific link for maintenance and repair, such as inspections of states of links, etc., in an Ethernet ring network, the operator can maintain services that are being provided so as to provide flexibility of the Ethernet ring network.

### DESCRIPTION OF THE DRAWINGS

FIG. 1 illustrates a forced protection switching method applied in an Ethernet ring network, according to an embodiment of the present invention;
FIG. 2 illustrates a forced protection switching clearing method applied in an Ethernet ring network, according to an embodiment of the present invention;
FIG. 3 is a flowchart illustrating a forced protection switching method applied in a node of an Ethernet ring network that has received a forced switching (FS) command, according to an embodiment of the present invention;
FIG. 4 is a flowchart illustrating a forced protection switching method applied in a normal node of an Ethernet ring network, according to an embodiment of the present invention;
FIG. 5 is a flowchart illustrating a forced protection switching method applied in a ring protection link (RPL) Owner of an Ethernet ring network, according to an embodiment of the present invention;
FIG. 6 is a flowchart illustrating a forced protection switching clearing method applied in a node of an Ethernet ring network that has received a FS clear command, according to an embodiment of the present invention;
FIG. 7 is a flowchart illustrating a forced protection switching clearing method applied in an RPL Owner of an Ethernet ring network, according to an embodiment of the present invention; and
FIG. 8 is a flowchart illustrating a forced protection switching clearing method applied in a normal node of an Ethernet ring network, according to an embodiment of the present invention.

### MODE OF THE INVENTION

The present invention will now be described more fully with reference to the accompanying drawings, in which exemplary embodiments of the invention are shown.

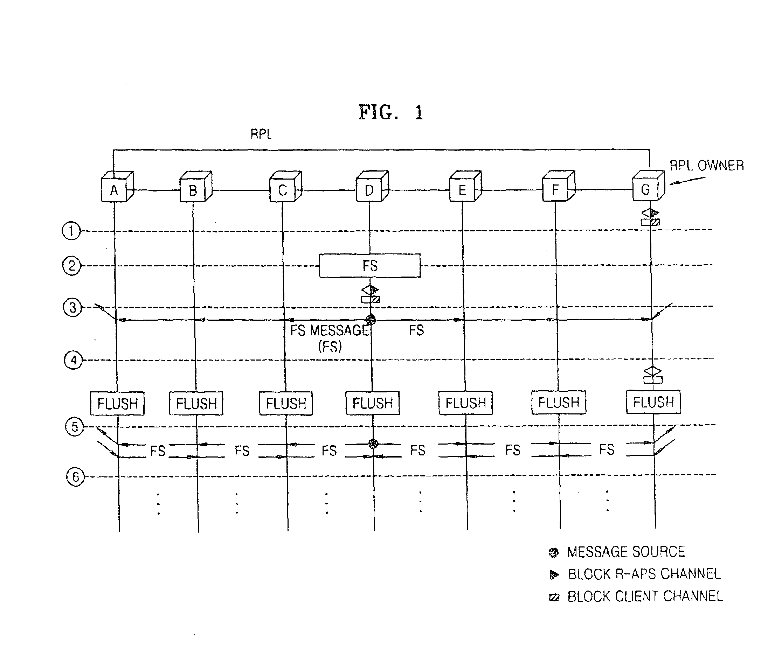

FIG. 1 illustrates a forced protection switching method applied in an Ethernet ring network, according to an embodiment of the present invention. Referring to FIG. 1, one (a link between nodes "A" and "G") from a plurality of links constituting the Ethernet ring network is set as a ring protection link (RPL), and the node "G" linked to one of two ends of the RPL is designated as an RPL Owner. The RPL Owner blocks the RPL when operating normally in order to prevent a loop from being formed.

For example, when an operator gives a forced switching (FS) command to node "D" in order to block a link between nodes "D" and "E," the node "D" blocks a port corresponding to the link between nodes "D" and "E", bidirectionally forwards a FS message periodically, and initializes, i.e., flushes, its filtering database (FDB). Here, the FDB refers to a table that includes port numbers and node identification information, i.e., a database indicating which port a received packet is forwarded to.

When a node that is not an RPL Owner receives a FS message, the node flushes its FDB. Without a higher priority demand, when the RPL Owner receives a FS message, the RPL Owner unblocks a port blocked when the RPL Owner blocked the RPL in an initial stage, and initializes its FDB.

The node "D" bidirectionally forwards the FS message periodically so that the other nodes recognize that a ring is forcedly switched. Even if the other nodes receive the FS message from the node "D," they do not re-initialize (re-flush) their FDBs after the first time the FS message is receives. Service traffic resumes when the FDBs of the nodes are updated through a media access control (MAC) learning process.

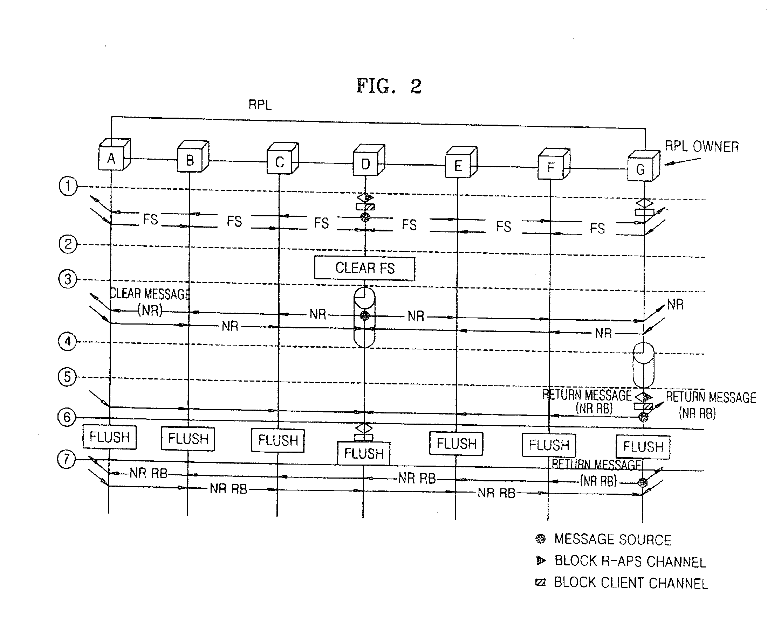

FIG. 2 illustrates a forced protection switching clearing method applied in an Ethernet ring network, according to an embodiment of the present invention. Referring to FIG. 2, an operator gives a clear command to node "D" in order to clear FS of the node "D" that is in a FS state, in which, for example, a right port of the node "D" is blocked and a blocked port of an RPL Owner is cleared.

When the node "D" receives the clear command, the node "D" drives a guard timer before flushing its FDB to prevent malfunctioning due to an unavailable FS message or return message that may be received from a neighboring node. Next, the node "D" bidirectionally forwards a clear message indicating that the clear command to clear FS has been given.

When the RPL Owner receives the clear message, the RPL Owner drives a Wait to Block (WTB) timer, and when the WTB timer expires, the RPL Owner re-blocks the port that had been unblocked and bidirectionally forwards a return message. The RPL Owner also flushes its FDB and bidirectionally forwards the return message periodically to indicate that a node of a ring is idle.

When the node "D" receives the return message, the node "D" clears the blocked right port and flushes its FDB when the guard timer expires. Even if the other nodes receive the return message, they do not re-initialize their FDBs after the first time, and service traffic resumes according to a MAC learning process.

FIG, 3 is a flowchart of a forced protection switching method applied in a node of an Ethernet ring network that has received a FS command, according to an embodiment of the present invention.

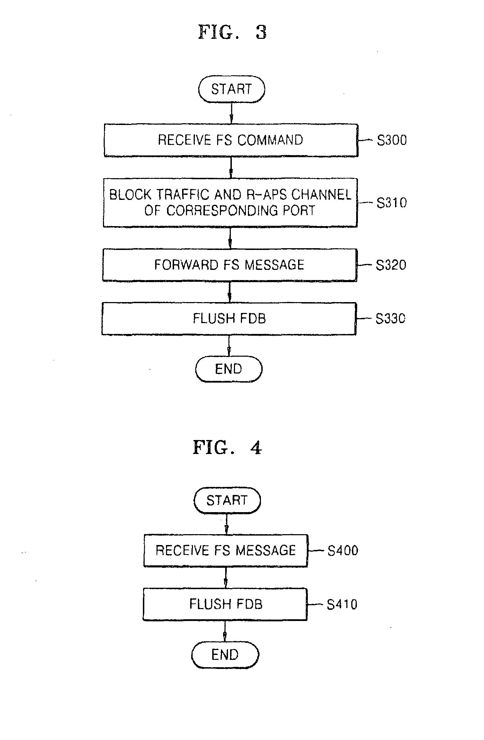

Referring to FIGS. 1 and 3, an operator inputs the FS command into a specific node (the node "D" in the case of FIG. 1) that is linked to a specific link in order to temporarily block the specific link. For convenience, the specific node that has received the FS command is referred to as the node "D" with reference to FIG. 1.

In operation S300, the node "D" receives the FS command. In operation S310, the node "D" blocks a Ring-Automatic Protection Switching (R-APS) channel and traffic from the specific link that is to be blocked. In operation S320, the node "D" bidirectionally forwards a FS message that indicates FS. In this state, the node "D" continues forwarding the FS message. In operation S330, the node "D" flushes its FDB.

FIG. 4 is a flowchart illustrating a forced protection switching method applied in a normal node of an Ethernet ring network, according to an embodiment of the present invention.

Referring to FIGS. 1 and 4, in operation S400, the normal node receives a FS message indicating FS from the node "D", which has received a FS command. In operation S410, the normal node flushes its FDB. The normal node periodically receives the FS message from the node "D" but does not perform any action with respect to the FS message that the normal node receives after the first time the FS message is received.

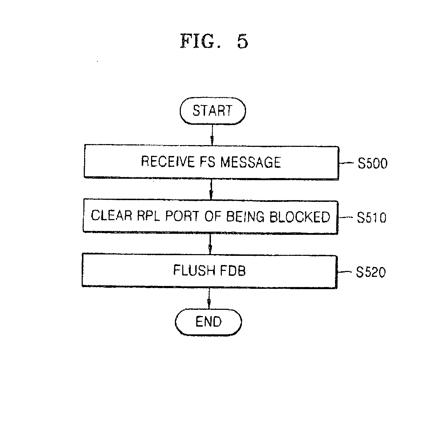

FIG. 5 is a flowchart illustrating a forced protection switching method applied in an RPL Owner of an Ethernet ring network, according to an embodiment of the present invention.

Referring to FIGS. 1 and 5, in operation S500, the RPL Owner receives a FS message indicating FS from the node "D", which has received a FS command. In operation S510, the RPL Owner clears blocking of a blocked RPL port. In operation S520, the RPL Owner flushes its FDB. The RPL Owner periodically, receives the FS message but does not perform any action with respect to the FS message that the RPL Owner receives after the first time.

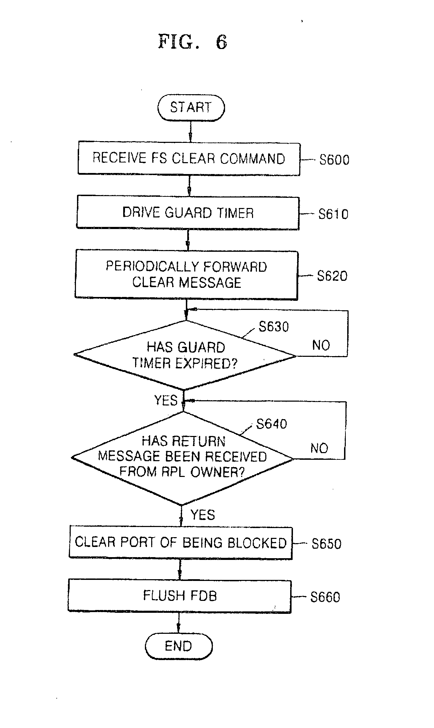

FIG. 6 is a flowchart illustrating a forced protection switching clearing method applied in a node of an Ethernet ring network that has received a FS clears command, according to an embodiment of the present invention.

Referring to FIGS. 2 and 6, in operation S600, the node "D", which has been forcedly switched by a FS command from an operator, receives a forced protection switching clear command from the operator. In operation S610, the node "D" drives a guard timer before flushing its FDB in order to prevent unavailable R-APS messages from being received. In operation S620, the node "D" forwards a clear message that indicates that forced protection switching has been cleared bidirectionally. In this state, the node "D" continues forwarding the clear message.

In operation S630, the node "D" determines whether the guard timer has expires. If the node "D" determines in operation S630 that the guard timer has expires, in operation S640, the node "D" determines whether the node "D" has received a return message that indicates that an RPL has been blocked from the RPL Owner. If the node "D" determines in operation S640 that the node "D" has received the return message, the node "D" clears a port that had been blocked by FS, in operation S650. In operation S660, the node "D" flushes its FDB.

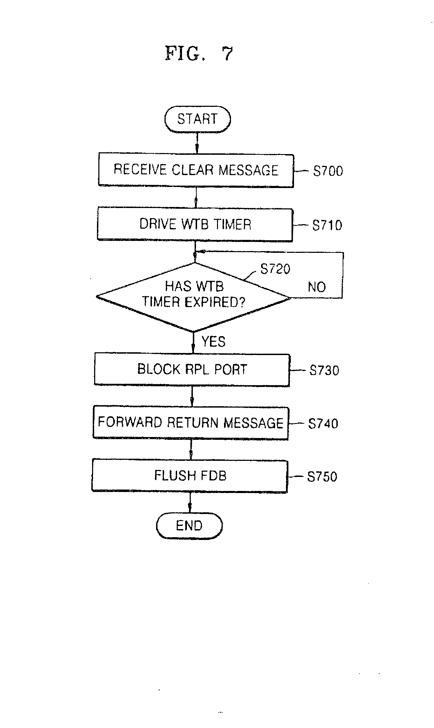

FIG. 7 is a flowchart illustrating a forced protection switching clearing method applied in an RPL Owner of an Ethernet ring network, according to an embodiment of the present invention.

Referring to FIGS. 2 and 7, in operation S700, the RPL Owner receives a clear message from the node "D." In operation S710, the RPL Owner drives a WTB timer. In operation S720, the RPL Owner determines whether the WTB timer has expired. If the RPL Owner determines in operation S720 that the WTB timer has expired, the RPL Owner blocks a RPL port in operation S730. In operation S740, the RPL Owner bidirectionally forwards a return message indicating that the RPL port has been re-blocked. In operation S750, the RPL Owner flushes its FDB.

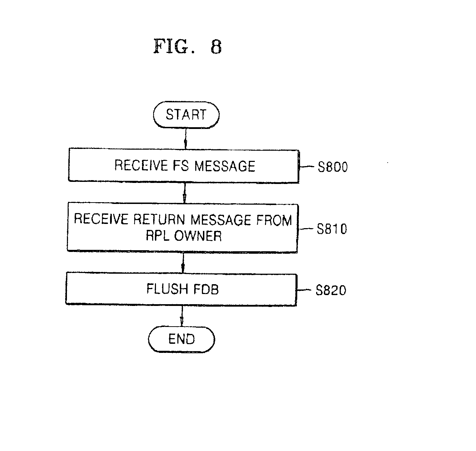

FIG. 8 is a flowchart illustrating a forced protection switching clearing method applied in a normal node of an Ethernet ring network according to an embodiment of the present invention.

Referring to FIGS. 2 and 8, in operation S800, the normal node receives a clear message from the node "D", which has received a FS clear command. In operation S810, the normal node receives a return message that indicates that the Ethernet ring network has been re-blocked, i.e., has returned to its initial state from the RPL Owner. In operation S820, the normal node flushes its FDB. The normal node does not perform any action with respect to the return message that the normal node receives after the first time the message is received.

The invention can also be embodied as computer readable codes on a computer readable recording medium. The computer readable recording medium is any data storage device that can store data that can be thereafter read by a computer system. Examples of the computer readable recording medium include read-only memory (ROM), random-access memory (RAM), CD-ROMs, magnetic tapes, floppy disks, and optical data storage devices. The computer readable recording medium can also be distributed over network coupled computer systems so that the computer readable code is stored and executed in a distributed fashion.

White this invention has been particularly shown and described with reference to preferred embodiments thereof, it will be understood by those skilled in the art that various changes in form and details may be made therein without departing from the invention as defined by the appended claims. The preferred embodiments should be considered in descriptive sense only and not for purposes of limitation. Therefore, the scope of the invention is defined not by the detailed description of the invention but by the appended claims, and all differences within the scope will be construed as being included in the present invention.

## Claims

1. A forced protection switching method for an Ethernet ring network, comprising:
in a node (D) of the Ethernet ring network,
receiving a forced switching command from an operator (S300);
blocking a port of a link as indicated in said forced switching command (S310);
forwarding bidirectionally in said Ethernet ring network, a forced switching message (S320) indicating that the Ethernet ring network is forcedly switched; and
flushing a filtering database of said node (S330),
wherein the blocking of the port (S310) comprises blocking traffic and an Ring-Automatic Protection Switching, R-APS, channel for a port corresponding to a blocked one of two links that are linked to the node, and
in a node (G) of the Ethernet ring network whose port is linked to a ring protection link, RPL, of the Ethernet ring network and is blocked,
receiving the forced switching message (S500) indicating that the Ethernet ring receiving the forced switching message (S500) indicating that the Ethernet ring network is forcedly switched;
clearing the blocked port linked to the RPL (S510); and
flushing a filtering database in said node (S520).

2. The forced protection switching method of claim 1, wherein the receiving of the forced switching message (S500) comprises receiving the forced switching message from the node of the Ethernet ring network that has received the forced switching command.

3. The forced protection switching method of claim 1, wherein the receiving of the forced switching message (S500) comprises receiving the FS message periodically, and wherein clearing of the port (S510) and flushing of the filtering database (S530) are performed only when the forced switching message is received for the first time.

4. The forced protection switching method of claim 1, further comprising:
in a node of the Ethernet ring network,
receiving the forced switching message (S400) indicating that the Ethernet ring network is forcedly switched; and
flushing a filtering database in said node (S410).

5. The forced protection switching method of claim 4, wherein the receiving of the forced switching message (S400) comprises receiving the forced switching message from the node of the Ethernet ring network that has received the forced switching command.

6. The forced protection switching method of claim 4, wherein the receiving of the forced switching message (S400) comprises receiving the forced switching message periodically, and wherein flushing of the filtering database (S410) is performed only when the forced switching message is received for the first time.

7. A forced protection switching clearing method for an Ethernet ring network, comprising:
in a node (D) of the Ethernet ring network that has been forcedly switched by a forced switching command,
receiving a forced switching clear command from an operator (S600);
driving a timer (S610);
forwarding bidirectionally in said Ethernet ring network, a clear message (S620) indicating that said node has been cleared of being forcedly switched,
and after the expiration of the timer (S630),
receiving a return message (S640) indicating that a port linked to a ring protection link, RPL, of the Ethernet ring network has been blocked;
clearing a blocked port of the node (S650); and
flushing a filtering database of said node (S660),
in a node (G) of the Ethernet ring network whose port is linked to the RPL of the Ethernet ring network and is cleared of being blocked,
receiving the clear message (S700) indicating that the Ethernet ring network had been cleared of being forcedly switched;
driving a timer (S710);
when the timer expires (S720), blocking the port that is linked to the RPL (S730);
forwarding the return message (S740) indicating that the port linked to the RPL has been blocked; and
flushing a filtering database of said node (S750).

8. The forced protection switching clearing method of claim 7, wherein the receiving of the clear message comprises receiving the clear message from the node of the Ethernet ring network that has received the forced switching clear command.

9. The forced protection switching clearing method of claim 7, further comprising:
in a node of the Ethernet ring network,
receiving the clear message (S800) indicating that the Ethernet ring network had been cleared of being forcedly switched;
receiving the return message (S810) indicating that the port linked to the RPL of the Ethernet ring network has been blocked; and
flushing a filtering database of said node (S820).

10. The forced protection switching clearing method of claim 9, wherein the receiving of the clear message (S800) comprises receiving the clear message from the node of the Ethernet ring network that has received the forced switching clear command.

11. A computer program comprising program code which when executed on a computer causes the computer to carry out a method according to one of claims 1 to 10 for forced protection switching or forced protection switching clearing.

## Patentansprüche

1. Verfahren zum erzwungenen Schutzumschalten für ein Ethernet-Ringnetzwerk, umfassend
in einem Knoten (D) des Ethernet-Ringnetzwerkes,
Empfangen einer Anweisung zum erzwungenen Umschalten von einem Operator (S300);
Blockieren eines Anschlusses einer Verbindung, wie in der Anweisung zum erzwungenen Umschalten angegeben (S310);
bidirektionales Weiterleiten einer Nachricht zum erzwungenen Umschalten, welche angibt, dass das Ethernet-Ringnetzwerk zwangsweise umgeschaltet wird, in dem Ethernet-Ringnetzwerk (S320); und
Leeren einer Filterdatenbank des Knotens (S330),
wobei das Blockieren des Anschlusses (S310) Blockieren von Verkehr und einem Ring-Automatic-Protection-Switching, R-APS, -Kanal für einen Anschluss umfasst, welcher einer blockierten von zwei Verbindungen entspricht, die mit dem Knoten verbunden sind, und
in einem Knoten (G) des Ethernet-Ringnetzwerkes, dessen Anschluss mit einer Ringschutzverbindung, RPL, des Ethernet-Ringnetzwerkes verbunden und blockiert ist,
Empfangen der Nachricht zum erzwungenes Umschalten (S500), welche angibt, dass das Ethernet-Ringnetzwerk zwangsweise umgeschaltet wird,
Freigeben des blockierten Anschlusses (S510), welcher mit der RPL verbunden ist; und
Leeren einer Filterdatenbank in dem Knoten (S520).

2. Verfahren zum erzwungenen Schutzumschalten nach Anspruch 1, wobei das Empfangen der Nachricht zum erzwungenen Umschalten (S500) Empfangen der Nachricht zum erzwungenen Umschalten von dem Knoten des Ethernet-Ringnetzwerkes umfasst, welcher die Anweisung zum erzwungenen Umschalten empfangen hat.

3. Verfahren zum erzwungenen Schutzumschalten nach Anspruch 1, wobei das Empfangen der Nachricht zum erzwungenen Umschalten (S500) periodisches Empfangen der FS-Nachricht umfasst und wobei das Freigeben des Anschlusses (S510) und Leeren der Filterdatenbank (S530) nur durchgeführt werden, wenn die Nachricht zum erzwungenen Umschalten erstmalig empfangen wird.

4. Verfahren zum erzwungenen Schutzumschalten nach Anspruch 1, ferner umfassend:
in einem Knoten des Ethernet-Ringnetzwerkes,
Empfangen der Nachricht zum erzwungenen Umschalten (S400), welche angibt, dass das Ethernet-Ringnetzwerk zwangsweise umgeschaltet wird; und
Leeren einer Filterdatenbank in dem Knoten (S410).

5. Verfahren zum erzwungenen Schutzumschalten nach Anspruch 4, wobei das Empfangen der Nachricht zum erzwungenen Umschalten (S400) Empfangen der Nachricht zum erzwungenen Umschalten von dem Knoten des Ethernet-Ringnetzwerkes umfasst, welcher die Anweisung zum erzwungenen Umschalten empfangen hat.

6. Verfahren zum erzwungenen Schutzumschalten nach Anspruch 4, wobei das Empfangen der Nachricht zum erzwungenen Umschalten (S400) periodisches Empfangen der Nachricht zum erzwungenen Umschalten umfasst und wobei Leeren der Filterdatenbank (S410) nur durchgeführt wird, wenn die Nachricht zum erzwungenen Umschalten erstmalig empfangen wird.

7. Verfahren zum Freigeben einer erzwungenen Schutzumschaltung für ein Ethernet-Ringnetzwerk, umfassend:
in einem Knoten (D) des Ethernet-Ringnetzwerkes, welcher durch eine Anweisung zum erzwungenen Umschalten zwangsweise umgeschaltet wurde,
Empfangen einer Anweisung zum Freigeben der erzwungenen Umschaltung von einem Operator (S600);
Betreiben eines Zeitgebers (S610);
bidirektionales Weiterleiten einer Nachricht zum Freigeben, welche angibt, dass der Knoten freigegeben wurde, zwangsweise umgeschaltet zu sein, in dem Ethernet-Ringnetzwerk (S620),
und nach dem Ablauf des Zeitgebers (S630),
Empfangen einer Antwortnachricht (S640), welche angibt, dass ein mit einer Ringschutzverbindung, RPL, des Ethernet-Ringnetzwerkes verbundener Anschluss blockiert wurde;
Freigeben eines blockierten Anschlusses des Knotens (S650); und
Leeren einer Filterdatenbank des Knotens (S660),
in einem Knoten (G) des Ethernet-Ringnetzwerkes, dessen Anschluss mit der RPL des Ethernet-Ringnetzwerkes verbunden und freigegeben ist, blockiert zu sein,
Empfangen der Nachricht zum Freigeben (S700), welche angibt, dass das Ethernet-Ringnetzwerk freigegeben wurde, zwangsweise umgeschaltet zu sein;
Betreiben eines Zeitgebers (S710);
wenn der Zeitgeber abgelaufen ist (S720), Blockieren des Anschlusses (S730), welcher mit der RPL verbunden ist;
Weiterleiten der Antwortnachricht (S740), welche angibt, dass der mit der RPL verbundene Anschluss blockiert wurde; und
Leeren einer Filterdatenbank des Knotens (S750).

8. Verfahren zum Freigeben einer erzwungenen Schutzumschaltung nach Anspruch 7, wobei das Empfangen der Nachricht zum Freigeben Empfangen der Nachricht zum Freigeben von dem Knoten des Ethernet-Ringnetzwerkes umfasst, welcher die Anweisung zum Freigeben der erzwungenen Umschaltung empfangen hat.

9. Verfahren zum Freigeben einer erzwungenen Schutzumschaltung nach Anspruch 7, ferner umfassend:
in einem Knoten des Ethernet-Ringnetzwerkes,
Empfangen der Nachricht zum Freigeben (S800), welche angibt, dass das Ethernet-Ringnetzwerk freigegeben wurde, zwangsweise umgeschaltet zu sein;
Empfangen der Antwortnachricht (S810), welche angibt, dass der mit der RPL des Ethernet-Ringnetzwerkes verbundene Anschluss blockiert wurde; und
Leeren einer Filterdatenbank des Knotens (S820).

10. Verfahren zum Freigeben einer erzwungenen Schutzumschaltung nach Anspruch 9, wobei das Empfangen der Nachricht zum Freigeben (S800) Empfangen der Nachricht zum Freigeben von dem Knoten des Ethernet-Ringnetzwerkes umfasst, welcher die Anweisung zum Freigeben der erzwungenen Umschaltung empfangen hat.

11. Computerprogramm, umfassend Programmcode, welcher, wenn er auf einem Computer ausgeführt wird, den Computer dazu veranlasst, ein Verfahren nach einem der Ansprüche 1 bis 10 zum erzwungenen Schutzumschalten oder Freigeben einer erzwungenen Schutzumschaltung auszuführen.

## Revendications

1. Procédé de commutation forcée de protection pour un réseau en anneau Ethernet, comprenant :
dans un noeud (D) du réseau en anneau Ethernet,
la réception d'une commande de commutation forcée depuis un opérateur (S300) ;
le blocage d'un port d'une liaison comme indiqué dans ladite commande de commutation forcée (S310) ;
la retransmission de façon bidirectionnelle dans ledit réseau en anneau Ethernet d'un message de commutation forcée (S320) indiquant que le réseau en anneau Ethernet est commuté de force ; et
la purge d'une base de données de filtrage dudit noeud (S330),
dans lequel le blocage du port (S310) comprend le blocage du trafic et d'un canal de commutation automatique de protection d'anneau, R-APS, pour un port correspondant à une liaison bloquée de deux liaisons qui sont liées au noeud, et
dans un noeud (G) du réseau en anneau Ethernet dont le port est lié à une liaison de protection d'anneau, RPL, du réseau en anneau Ethernet et est bloqué,
la réception du message de commutation forcée (S500) indiquant que le réseau en anneau Ethernet est commuté de force ;
l'annulation du port bloqué lié au RPL (S510) ; et
la purge d'une base de données de filtrage dans ledit noeud (S520).

2. Procédé de commutation forcée de protection selon la revendication 1, dans lequel la réception du message de commutation forcée (S500) comprend la réception du message de commutation forcée depuis le noeud du réseau en anneau Ethernet qui a reçu la commande de commutation forcée.

3. Procédé de commutation forcée de protection selon la revendication 1, dans lequel la réception du message de commutation forcée (S500) comprend la réception périodique du message FS, et dans lequel l'annulation du port (S510) et la purge de la base de données de filtrage (S530) sont réalisées seulement lorsque le message de commutation forcée est reçu pour la première fois.

4. Procédé de commutation forcée de protection selon la revendication 1, comprenant en outre :
dans un noeud du réseau en anneau Ethernet,
la réception du message de commutation forcée (S400) indiquant que le réseau en anneau Ethernet est commuté de force ; et
la purge d'une base de données de filtrage dans ledit noeud (S410).

5. Procédé de commutation forcée de protection selon la revendication 4, dans lequel la réception du message de commutation forcée (S400) comprend la réception du message de commutation forcée depuis le noeud du réseau en anneau Ethernet qui a reçu la commande de commutation forcée.

6. Procédé de commutation forcée de protection selon la revendication 4, dans lequel la réception du message de commutation forcée (S400) comprend la réception périodique du message de commutation forcée, et dans lequel la purge de la base de données de filtrage (S410) est réalisée seulement lorsque le message de commutation forcée est reçu pour la première fois.

7. Procédé d'annulation de commutation forcée de protection appliqué pour un réseau en anneau Ethernet, comprenant :
dans un noeud (D) du réseau en anneau Ethernet qui a été commuté de force par une commande de commutation forcée,
la réception d'une commande d'annulation de commutation forcée depuis un opérateur (S600) ;
le déclenchement d'un temporisateur (S610) ;
la retransmission de façon bidirectionnelle dans ledit réseau en anneau Ethernet d'un message d'annulation (S620) indiquant que la commutation forcée dudit noeud a été annulée,
et après expiration du temporisateur (S630),
la réception d'un message de retour (S640) indiquant qu'un port lié à une liaison de protection d'anneau, RPL, du réseau en anneau Ethernet a été bloqué ;
l'annulation d'un port bloqué du noeud (S650) ; et
la purge d'une base de données de filtrage dudit noeud (S660),
dans un noeud (G) du réseau en anneau Ethernet dont le port est lié au RPL du réseau en anneau Ethernet et dont l'annulation est bloquée,
la réception du message d'annulation (S700) indiquant que la commutation de force du réseau en anneau Ethernet avait été annulée ;
le déclenchement d'un temporisateur (S710),
lorsque le temporisateur expire (S720), le blocage du port lié au RPL (S730) ;
la retransmission du message de retour (S740) indiquant que le port lié au RPL a été bloqué ; et
la purge d'une base de données de filtrage dudit noeud (S750).

8. Procédé d'annulation de commutation forcée de protection selon la revendication 7, dans lequel la réception du message d'annulation comprend la réception du message d'annulation depuis le noeud du réseau en anneau Ethernet qui a reçu la commande d'annulation de commutation forcée.

9. Procédé d'annulation de commutation forcée de protection selon la revendication 7, comprenant en outre :
dans un noeud du réseau en anneau Ethernet,
la réception du message d'annulation (S800) indiquant que la commutation de force du réseau en anneau Ethernet a été annulée ;
la réception du message de retour (S810) indiquant que le port lié au RPL du réseau en anneau Internet a été bloqué ; et
la purge d'une base de données de filtrage dudit noeud (S820).

10. Procédé d'annulation de commutation forcée de protection selon la revendication 9, dans lequel la réception du message d'annulation (S800) comprend la réception du message d'annulation depuis le noeud du réseau en anneau Ethernet qui a reçu la commande d'annulation de commutation forcée.

11. Programme informatique comprenant un code de programme qui lorsqu'il est exécuté sur un ordinateur amène l'ordinateur à réaliser un procédé selon l'une des revendications 1 à 10 pour une commutation forcée de protection ou une annulation de commutation de protection forcée.
